# EUROPÄISCHE PATENTSCHRIFT

(11) **EP 3 609 458 B1**
(45) Veröffentlichungstag und Bekanntmachung des Hinweises auf die Patenterteilung: **12.07.2023**
(21) Anmeldenummer: 18712531.5
(22) Anmeldetag: 12.03.2018
(51) Int. Cl.: A61H 3/04, B62K 5/003

(54) **FAHRBARE GEHHILFE**
MOBILE WALKING AID
DÉAMBULATEUR MOBILE

(30) Priorität: 10.04.2017 DE 202017102137 U
(43) Veröffentlichungstag der Anmeldung: 19.02.2020
(73) Patentinhaber: Orthoscoot GmbH, 86356 Neusäß/Vogelsang (DE)
(72) Erfinder: HEINRICH, Frank, 86153 Augsburg (DE); HERTLE, Andreas, 86482 Aystetten (DE)
(74) Vertreter: Charrier Rapp & Liebau
(86) Internationale Anmeldenummer: PCT/EP2018/056065
(87) Internationale Veröffentlichungsnummer: WO 2018/188866

(56) Entgegenhaltungen:
- US-A- 6 053 189
- US-A1- 2003 094 779

## Beschreibung

Die Erfindung betrifft eine fahrbare Gehhilfe nach dem Oberbegriff des Anspruchs 1, wie sie aus der DE 20 2015 106 423 U1 bekannt ist. Gehhilfen dieser Art dienen dazu, einer an einem Bein oder Fuß verletzten Person eine Bewegung ohne Belastung des verletzten Beins bzw. Fußes zu ermöglichen, um eine Beeinträchtigung des Heilungsprozesses durch eine solche Belastung zu vermeiden. Die Fortbewegung mit einer solchen Gehhilfe ähnelt der Benutzung eines Tretrollers, wobei das verletzte Bein oder das Bein, dessen Fuß verletzt ist, zur Entlastung der Verletzung abgewinkelt mit dem Unterschenkel auf einer annähernd horizontalen länglichen Auflage liegt, so dass die Gehhilfe anstelle des verletzten Beins bzw. Fußes das Körpergewicht aufnimmt, wenn das verletzte Bein bzw. das Bein mit dem verletzten Fuß belastet wird.

Das Fahrwerk dieser bekannten Gehhilfe hat eine zweirädrige Vorderachse, die mittels eines am oberen Ende einer Lenkstange angeordneten Lenkers lenkbar ist, und eine einrädrige Hinterachse, wobei die Auflage auf einem Rahmen zwischen den beiden Achsen in einer lateral mittigen Position angeordnet ist. Durch diese dreirädrige Konstruktion mit einem hinteren Einzelrad wird bei geringen Gesamtabmessungen sowohl die Auflage symmetrisch auf dem Boden abgestützt, um ein stabiles Fahrverhalten zu gewährleisten, als auch dem Benutzer bei der Bewegung eine natürliche Beinhaltung ohne seitliche Spreizung der Oberschenkel ermöglicht, indem sich der Unterschenkel bzw. der Fuß des intakten Beins und das Hinterrad bei natürlicher Beinhaltung problemlos aneinander vorbei bewegen können.

Aus der US 2003/0094779 A1 ist eine fahrbare Gehhilfe mit zwei Vorderrädern und zwei Hinterrädern bekannt, wobei für jedes Rad eine eigene Achse vorgesehen ist. Die Hinterräder und die Vorderräder sind jeweils sind an einem Querträger angeordnet. Die beiden Querträger sind durch einen in Fahrtrichtung verlaufenden Längsträger miteinander verbunden. Der hintere Querträger kann gegenüber dem Längsträger seitlich verschoben werden, um die Position der Hinterräder daran anzupassen, ob der linke oder der rechte Unterschenkel auf der über dem Längsträger angeordneten Polsterauflage abgestützt werden soll. Auf diese Weise kann ein ausreichender Raum für die Bewegung des nicht verletzten Beins des Benutzers der Gehhilfe geschaffen werden.

Aus der US 6,053,189 ist eine fahrbare Gehhilfe mit vier Rädern bekannt, die jeweils einzeln an einer rechteckigen Bodenplatte nahe deren vier Ecken befestigt sind. Jedes dieser Räder hat eine eigene horizontale Achse und ist um eine horizontale Achse gegenüber der Bodenplatte drehbar. Zur seitlichen Abstützung ist ein Ausleger mit einem zusätzlichen Rad an der Bodenplatte so befestigbar, dass sich das zusätzliche Rad seitlich links oder rechts von der Bodenplatte befindet.

Ausgehend von diesem Stand der Technik liegt der Erfindung die Aufgabe zugrunde, die Funktionssicherheit einer Gehhilfe der bekannten Art weiter zu verbessern.

Diese Aufgabe wird erfindungsgemäß durch eine fahrbare Gehhilfe mit den Merkmalen des Anspruchs 1 gelöst. Vorteilhafte Ausgestaltungen und Weiterbildungen der Erfindung sind Gegenstand der Unteransprüche.

Erfindungsgemäß ist bei einer fahrbaren Gehhilfe mit einem Fahrwerk, einem Rahmen und einer Auflage für ein Bein einer Person, wobei das Fahrwerk eine zweirädrige Vorderachse und eine Hinterachse aufweist, die Hinterachse zwischen einer einrädrigen Ausführung mit einem ersten Rad und einer zweirädrigen Ausführung mit einem ersten Rad und einem zweiten Rad umrüstbar. Durch das zweite Rad wird die Hinterachse bei Bedarf in seitlicher Richtung stabilisiert und der Gefahr eines Umkippens, die bei einem dreirädrigen Gefährt bei einer Kurvenfahrt, insbesondere bei hoher Geschwindigkeit und/oder zur Außenseite der Kurve hin abfallendem Boden gegeben ist, vorgebeugt. Hierdurch wird die Betriebssicherheit einer Gehhilfe verbessert. Insbesondere kommt dies Benutzern mit beeinträchtigtem Gleichgewichtsgefühl zugute, bei denen ohnehin eine erhöhte Gefahr des Umkippens besteht. Durch die Umrüstbarkeit kann die Gehhilfe gezielt an die Bedürfnisse eines Benutzers angepasst werden.

Zur Umrüstung von der einrädrigen in die zweirädrige Ausführung kann ein Umrüstsatz vorgesehen sein, der ein zweites Rad und eine gemeinsame Achse für beide Räder aufweist, die länger ist als diejenige der einrädrigen Ausführung, wobei die gemeinsame Achse an dem Rahmen in zwei verschiedenen Positionen montierbar ist, in welchen das erste Rad jeweils an der gleichen Stelle wie in der einrädrigen Ausführung und das zweite Rad wahlweise links oder rechts lateral von dem ersten Rad versetzt angeordnet ist.

Alternativ hierzu kann zur Umrüstung von der einrädrigen in die zweirädrige Ausführung ein Umrüstsatz vorgesehen sein, der eine an der Achse des ersten Rades montierbare Achsverlängerung und ein zweites Rad aufweist. Hierdurch wird der Aufwand zur Umrüstung gering gehalten, indem die einrädrige Hinterachse zur Umrüstung nicht komplett ausgetauscht, sondern nur durch den Anbau von Komponenten erweitert zu werden braucht. Vorteilhaft ist es hierbei, wenn die Achsverlängerung wahlweise auf jeder der beiden Seiten der Achse des ersten Rades montierbar ist. Hierdurch ist eine problemlose Anpassung der Gehhilfe an den jeweiligen Bedarf des Benutzers möglich. Außerdem ist es von Vorteil, wenn sich die Achsverlängerung im montierten Zustand koaxial zur Achse des ersten Rades erstreckt. Dies erleichtert die Montage der Achsverlängerung und ermöglicht es, dass das zweite Rad einen annähernd gleichen Durchmesser hat wie das erste Rad, wodurch sich mit dem zweiten Rad ein besonders stabiles Fahrverhalten ergibt.

Zweckmäßigerweise hat das zweite Rad einen geringfügig kleineren Durchmesser als das erste Rad. Dies beruht darauf, dass die einzige Bremse der Gehhilfe an dem ersten Rad der Hinterachse angeordnet ist, um der Gefahr des Umkippens nach vorne, die bei einer Bremsung der Räder der Vorderachse bestünde, vorzubeugen. Der geringfügig kleinere Durchmesser des zweiten Rades gewährleistet einerseits im normalen Fahrbetrieb einen ständigen Kontakt des ersten, mit der Bremse ausgestatteten Rades mit dem Boden und sorgt andererseits dafür, dass auch im Fall eines Bodenkontaktes des zweiten Rades noch eine vertikale Belastung des ersten Rades aufrechterhalten bleibt, die zur Erzielung der notwendigen Wirkung der Bremse ausreicht. Hierzu ist vorzugsweise der Durchmesser des zweiten Rades um 1 cm bis 3 cm kleiner als derjenige des ersten Rades. Der optimale Durchmesserunterschied zwischen den beiden Rädern der Hinterachse hängt von deren Abstand und der Härte der Reifen bzw. deren Verformung durch Einwirkung des Gewichts des Fahrers ab.

Von Vorteil ist es ferner, wenn das zweite Rad in der zweirädrigen Ausführung der Hinterachse einen signifikanten Abstand von dem ersten Rad hat, der mindestens ein Sechstel des Abstandes zwischen den beiden Rädern der Vorderachse beträgt. Grundsätzlich ist das Fahrverhalten der Gehhilfe in der zweirädrigen Ausführung der Hinterachse umso stabiler, je größer der Abstand zwischen den beiden Rädern ist. Um die beabsichtigte Stabilisierungswirkung zu erreichen, sollte ein gewisser Mindestabstand nicht unterschritten werden. Andererseits ist es bevorzugt, dass das zweite Rad in der zweirädrigen Ausführung der Hinterachse einen Abstand von dem ersten Rad hat, der höchstens ein Drittel des Abstandes zwischen den beiden Rädern der Vorderachse beträgt. Ein zu großer Abstand würde nämlich die Manövrierfähigkeit der Gehhilfe beeinträchtigen, indem in Kurven, bei denen sich das zweite Rad auf der Innenseite befindet, die Gefahr des Hängenbleibens an Hindernissen mit dem zweiten Rad bestünde.

Des Weiteren ist es zweckmäßig, wenn das zweite Rad mittels einer Rast- oder Schraubverbindung ohne Verwendung eines Werkzeugs an der Achsverlängerung montierbar und von dieser demontierbar ist. Hierfür kann bspw. eine Flügelmutter oder eine Flügelschraube eingesetzt werden. Hierdurch kann das zweite Rad mühelos entfernt werden, um die Abmessungen der Gehhilfe zum Transport zu verringern. Ferner hat der Benutzer die Wahlmöglichkeit, die Gehhilfe je nach Bedarf sowohl mit einer zweirädrigen, als auch einrädrigen Hinterachse zu benutzen. Eine einfache und zweckmäßige Realisierung der Achsverlängerung besteht darin, dass diese eine auf die Achse des ersten Rades aufschraubbare Distanzhülse und eine mit der Distanzhülse verrastbare Zusatzachse, an welcher das zweite Rad gelagert ist, aufweist.

Sowohl in der einrädrigen Ausführung, als auch in der zweirädrigen Ausführung ist das erste Rad der Hinterachse vorzugsweise lateral mittig zwischen den Vorderrädern angeordnet. Dies ist bei beiden Ausführungen der Hinterachse die optimale Position hinsichtlich der Fahrstabilität der Gehhilfe und es vereinfacht die Umrüstung zwischen der einrädrigen und der zweirädrigen Ausführung.

Besonders vorteilhaft ist es hinsichtlich der Bremsung, wenn die Hinterachse drehbar an dem Rahmen gelagert ist und in der zweirädrigen Ausführung ihre zwei Räder drehfest miteinander verbunden sind. Hierdurch wirkt die Bremse des ersten Rades auch in der zweirädrigen Ausführung der Hinterachse auf beide Räder, was es ermöglicht, dass sowohl in der einrädrigen Ausführung, als auch in der zweirädrigen Ausführung der Hinterachse nur eine einzige Bremse an dem ersten Rad der Hinterachse vorgesehen zu sein braucht, ohne dass die Bremswirkung durch eine ungünstige Gewichtsverteilung auf die zwei Räder, bei einer überwiegenden Belastung des zweiten Rades, beeinträchtigt werden könnte.

Eine vorteilhafte Realisierung der Kombination einer drehbaren Lagerung der Hinterachse an dem Rahmen und einer drehfesten Verbindung ihrer beiden Räder in der zweirädrigen Ausführung besteht darin, dass die Achse des ersten Rades drehbar an dem Rahmen gelagert und das erste Rad drehfest mit ihr verbunden ist, und dass zur Umrüstung in die zweirädrige Ausführung eine Achsverlängerung drehfest mit der Achse des ersten Rades und das zweite Rad drehfest mit der Achsverlängerung verbindbar ist.

Bevorzugte Ausführungsbeispiele der Erfindung werden nachfolgend anhand der Zeichnungen beschrieben. In diesen zeigt
- Fig. 1: eine perspektivische Ansicht eines ersten Ausführungsbeispiels der erfindungsgemäßen Gehhilfe,
- Fig. 2: eine andere perspektivische Ansicht der Gehhilfe von Fig. 1,
- Fig. 3: eine Ansicht der Gehhilfe von Fig. 1 von unten,
- Fig. 4: die Hinterachse der Gehhilfe von Fig. 1 in zweirädriger Ausführung,
- Fig. 5: eine Explosionsdarstellung der Hinterachse von Fig. 4,
- Fig. 6: eine schematische Darstellung eines bei der Hinterachse von Fig. 4 verwendeten Rastmechanismus
- Fig. 7: eine Explosionsdarstellung des Rahmens und der zweirädrigen Hinterachse eines zweiten Ausführungsbeispiels der erfindungsgemäßen Gehhilfe,
- Fig. 8: eine Explosionsdarstellung des Rahmens und der zweirädrigen Hinterachse eines dritten Ausführungsbeispiels der erfindungsgemäßen Gehhilfe und
- Fig. 9: eine Explosionsdarstellung des Rahmens und der zweirädrigen Hinterachse eines vierten Ausführungsbeispiels der erfindungsgemäßen Gehhilfe.

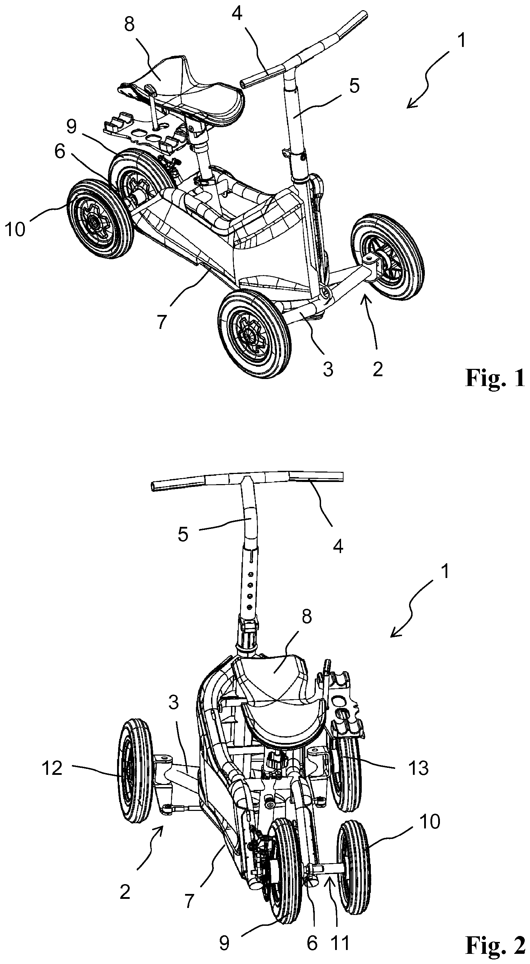

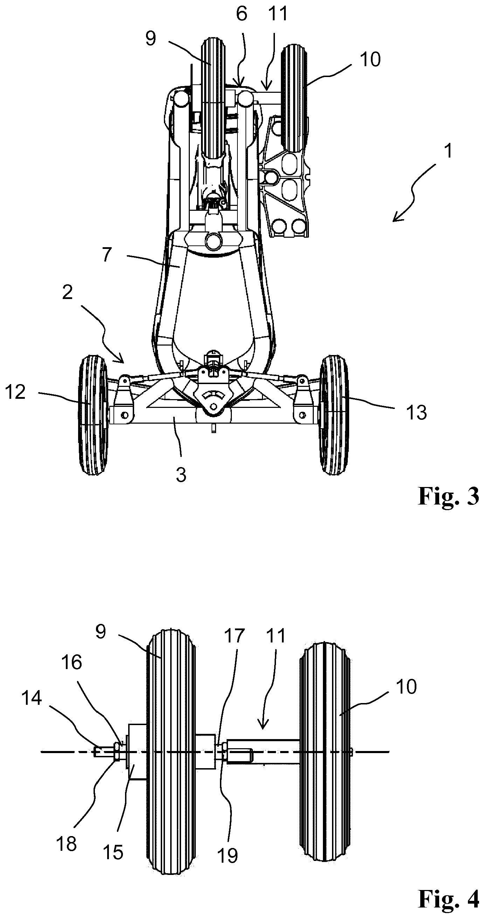

Eine erfindungsgemäße Gehhilfe 1, von der in den Figuren 1 und 2 ein erstes Ausführungsbeispiel in zwei verschiedenen perspektivischen Ansichten schräg von vorne bzw. schräg von hinten und in Fig. 3 in einer Ansicht von unten zu sehen ist, umfasst als Hauptkomponenten ein Fahrwerk 2, mit einer zweirädrigen Vorderachse 3, welche mittels eines Lenkers 4 über eine Lenkstange 5 lenkbar ist, und mit einer nicht lenkbaren Hinterachse 6, ferner einen Rahmen 7 und eine an dem Rahmen 7 befestigte Auflage 8 für ein Bein bzw. einen Unterschenkel eines Patienten, dessen Mobilität durch die Gehhilfe 1 erleichtert werden soll. Die Hinterachse 6 ist erfindungsgemäß zwischen einer einrädrigen und einer zweirädrigen Ausführung umrüstbar, wobei in den Figuren 1 bis 3 jeweils bereits die zweirädrige Ausführung mit einem ersten Rad 9 und einem zweiten Rad 10 gezeigt ist.

Die Umrüstung auf die zweirädrige Ausführung erfolgt bei diesem Ausführungsbeispiel mittels eines Umrüstsatzes, dessen Hauptkomponenten das zweite Rad 10 und eine Achsverlängerung 11 sind. Das erste Rad 9 ist an der Hinterachse 6 lateral mittig angeordnet, während das zweite Rad 10 am Ende der Achsverlängerung 11 lateral signifikant gegenüber dem ersten Rad 9 versetzt ist, d.h. der seitliche Abstand von dem ersten Rad 9 beträgt einen signifikanten Bruchteil des Abstandes zwischen den beiden Rädern 12 und 13 der Vorderachse 3, in dem gezeigten Beispiel ca. ein Viertel dieses Abstandes. Wie ferner insbesondere in Fig. 3 deutlich erkennbar ist, hat das zweite Rad 10 einen etwas geringeren Durchmesser als das erste Rad 9. Beide Räder 9 und 10 bestehen ebenso wie die Räder 12 und 13 der Vorderachse aus Vollgummi.

Die in den Figuren 1 bis 3 gezeigte Konfiguration der erfindungsgemäßen Gehhilfe 1 ist für einen Benutzer bestimmt, dessen rechtes Bein der Entlastung bedarf und dessen linkes Bein intakt ist, da das zweite Rad 10 auf der in Fahrtrichtung gesehen rechten Seite der Gehhilfe 1 montiert ist, so dass es das linke Bein bzw. den linken Fuß bei dessen Bewegung nicht stört. Es ist deshalb auf der rechten Seite montiert, um eine zusätzliche Sicherheit gegen ein Umkippen der Gehhilfe 1 mitsamt des Benutzers nach rechts, insbesondere bei der Fahrt in einer Linkskurve zu schaffen. Die Gefahr eines solchen Umkippens wäre in der Ausführung mit einrädriger Hinterachse 6, d.h. ohne das zweite Rad 10 insbesondere dann nicht ausgeschlossen, wenn das Gleichgewichtsgefühl des Benutzers gestört ist und/oder die Linkskurve zu schnell durchfahren wird und/oder der Boden zur Außenseite der Linkskurve hin geneigt ist. In einer solchen Situation gelangt in der zweirädrigen Ausführung das zweite Rad 10 in Bodenkontakt und stützt die Gehhilfe 1 entgegen der Kipprichtung ab.

Je nach Bedarf kann das zweite Rad 10 auf jeder Seite des ersten Rades 9 montiert werden. Für einen Benutzer, dessen linkes Bein durch die Gehhilfe 1 abgestützt werden soll und dessen rechtes Bein intakt ist, würde es auf der anderen, d.h. in Fahrtrichtung gesehen linken Seite des ersten Rades 9 montiert werden. Der geringere Durchmesser des zweiten Rades 10 beruht darauf, dass die Bremse der Gehhilfe 1 an der Hinterachse 6 angeordnet ist und auf das erste Rad 9 wirkt. Bei normalem Betrieb, d.h. außerhalb der zuvor beschriebenen Gefahrensituation des Umkippens nach außen, soll stets nur das erste Rad 9 am Boden sein, da die Bremse der Gehhilfe 1 nur auf dieses Rad 9 wirkt.

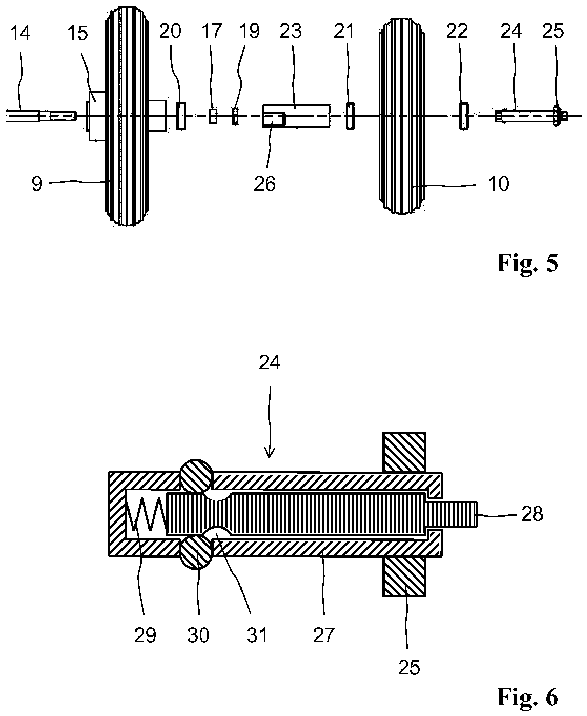

Die Montage der Achsverlängerung 11 und des zweiten Rades 10 an der Achse 14 des ersten Rades 9 zeigen die Figuren 4 und 5, wobei in Fig. 4 der fertig montierte Zustand und Fig. 5 eine Explosionsdarstellung der Komponenten zu sehen ist. Wie Fig. 4 zeigt, befinden sich die beiden Räder 9 und 10 im fertig montierten Zustand der zweirädrigen Ausführung der in einer zueinander koaxialen Lage. Die Felge 15 des ersten Rades 9 ist hat eine unsymmetrische Form, da nur an einer Seite, nämlich an der in Fig. 4 linken Seite der Anbau einer Bremsscheibe an die Felge 4 vorgesehen ist. Die Achsverlängerung 11 wird bei ihrem Anbau auf ein Gewinde am Ende der Achse 14 aufgeschraubt. Ansonsten wird die Hinterachse 6 der Gehhilfe 1 gegenüber der einrädrigen Ausführung nicht verändert, d.h. es werden keine ihrer Komponenten entfernt oder ausgetauscht. Der in Fig. 4 nicht gezeigte Rahmen 7 der Gehhilfe 1 wird an der Achse 14 zu beiden Seiten des ersten Rades 9 an Distanzhülsen 16 und 17 abgestützt und durch Muttern 18 und 19 festgeklemmt, wie es bei der Befestigung der Räder von Fahrrädern am Rahmen bzw. der Vorderradgabel bekannt ist. Auch in dieser Hinsicht erfolgt durch die Montage der Achsverlängerung 11 keine Veränderung gegenüber der einrädrigen Ausführung.

In der Explosionsdarstellung von Fig. 5 ist außer den zuvor genannten Komponenten der einrädrigen Ausführung zusätzlich noch ein Wälzlager 20 zu sehen, welches zur Lagerung der Felge 15 an der Achse 14 in die Felge 15 eingepresst ist. Ein weiteres Wälzlager gleicher Art, welches in Fig. 5 nicht zu sehen ist, befindet sich auf der anderen, in Fig. 5 linken Seite der Felge 15. In gleicher Weise sind auch zwei Wälzlager 21 und 22 in die Felge des zweiten Rades 10 eingepresst. Die Achsverlängerung 11 besteht, wie aus Fig. 5 ersichtlich ist, aus einer Distanzhülse 23 und aus einer Zusatzachse 24, an welcher das zweite Rad 10 über die Wälzlager 21 und 22 drehbar gelagert ist. Am äußeren Ende der Zusatzachse 24 ist eine Mutter 25 aufgeschraubt. Die Distanzhülse 23 ist auf das Gewinde am Ende der Achse 14 des ersten Rades 9 aufgeschraubt, wozu als Werkzeug ein Gabelschlüssel benötigt wird. Die Distanzhülse 23 weist hierzu geeignete Abflachungen 26 ihrer Oberfläche auf.

Das zweite Rad 10 ist an der Distanzhülse 23 ohne Verwendung eines Werkzeugs montierbar, indem es auf die Zusatzachse 24 aufgeschoben wird und diese dann von außen axial in die Distanzhülse 23 eingeführt und mit dieser verrastet wird. Hierzu weist die Zusatzachse 24 einen Rastmechanismus auf, der in Fig. 6 vereinfacht schematisch dargestellt ist. Die Zusatzachse 24 besteht aus einem einseitig offenen Rohr 27, in dem ein Stift 28 geführt ist. Der Stift ragt aus dem Rohr 27 an dessen offenem Ende heraus und ist an seinem anderen Ende in dem Rohr an dessen geschlossenem Ende über eine Feder 29 abgestützt. An einer bestimmten axialen Position befinden sich mehrere radiale Bohrungen, in denen jeweils eine Kugel 30 angeordnet ist. Die Kugeln 30 werden durch den Stift 28 radial nach außen gedrückt. Ihr Durchmesser ist etwas größer als derjenige der Bohrungen, so dass sie nicht durch diese hindurch nach außen aus dem Rohr 27 herausfallen können. Der Stift 28 weist an einer bestimmten axialen Position Vertiefungen 31 auf, in welche die Kugeln 30 zurückweichen können, wenn sich der Stift 28 in einer axialen Position befindet, in der die Vertiefungen 31 den Bohrungen mit den Kugeln 30 gegenüberliegen. Um den Stift in diese Position zu versetzen, muss eine axiale Kraft auf den Stift 28 ausgeübt werden, durch welche die Feder 29 komprimiert wird.

Bei der Montage des zweiten Rades 10 wird der Stift 28 manuell in das Rohr 27 gedrückt, bis die Kugeln 30 in die Vertiefungen 31 zurückweichen. Die Zusatzachse 24 wird dann mit dem auf ihr befindlichen zweiten Rad 10 axial in die an der Achse 14 bereits vormontierte Distanzhülse 23 eingeführt, bis die Kugeln 30 eine axiale Position erreichen, an der Bohrungen in der Distanzhülse 23 angeordnet sind, in welche die Kugeln 30 hineinragen, wenn diese durch den Stift 28 durch die Bohrungen in dem Rohr 27 nach außen gedrückt werden. Letzteres wird bewirkt, indem der Stift 28 losgelassen wird, so dass er von der Feder 29 axial bis zu seinem Anschlag am offenen Ende des Rohres 27 nach außen gedrückt wird. Die Bohrungen in der Distanzhülse 23 sind in den Figuren nicht dargestellt.

Durch das Hineinragen der Kugeln 30 durch die Bohrungen in dem Rohr 27 der Zusatzachse 24 in die zugeordneten Bohrungen in der Distanzhülse 23 wird die Zusatzachse 24 mit der Distanzhülse 23 axial verrastet. Diese Verrastung kann gelöst werden, indem der Stift 28 wieder durch eine manuell ausgeübte Kraft axial in dem Rohr 27 so weit verschoben wird, dass die Kugeln 30 in die Vertiefungen 31 zurückweichen können. Dann kann die Zusatzachse 24 aus der Distanzhülse 23 herausgezogen und das zweite Rad 10 auf diese Weise demontiert werden. Unter Einsatz eines Werkzeugs kann auch die Distanzhülse 23 wieder von der Achse 14 abgeschraubt und die Hinterachse 6 in die einrädrige Ausführung zurückversetzt werden. Bei Bedarf kann die Achsverlängerung 11 dann auch auf der anderen Seite des ersten Rades 9 angebracht werden, um die Gehhilfe 1 für die Benutzung durch eine andere Person vorzubereiten, deren linkes Bein abgestützt werden soll und für die eine Stabilisierung der Hinterachse 6 durch ein zweites Rad 10 als sinnvoll bzw. nötig erachtet wird.

Bei dem vorausgehend beschriebenen Ausführungsbeispiel hängt die Bremswirkung beim Einsatz der zweirädrigen Hinterachse 6 von der Gewichtsverteilung zwischen den beiden Rädern 9 und 10 der Hinterachse 6 ab, da nur das erste, lateral mittig angeordnete Rad 9 mit einer Bremse ausgestattet ist und somit nur dieses Rad 9 gebremst wird. Dies kann sich insbesondere bei einer Bremsung in einer Kurve, in der sich das zweite Rad 10 auf der Außenseite der Kurve befindet, negativ auf die Bremswirkung auswirken, falls während der Kurvenfahrt ein signifikanter Anteil des Gesamtgewichts des Benutzers auf dem zweiten Rad 10 lastet.

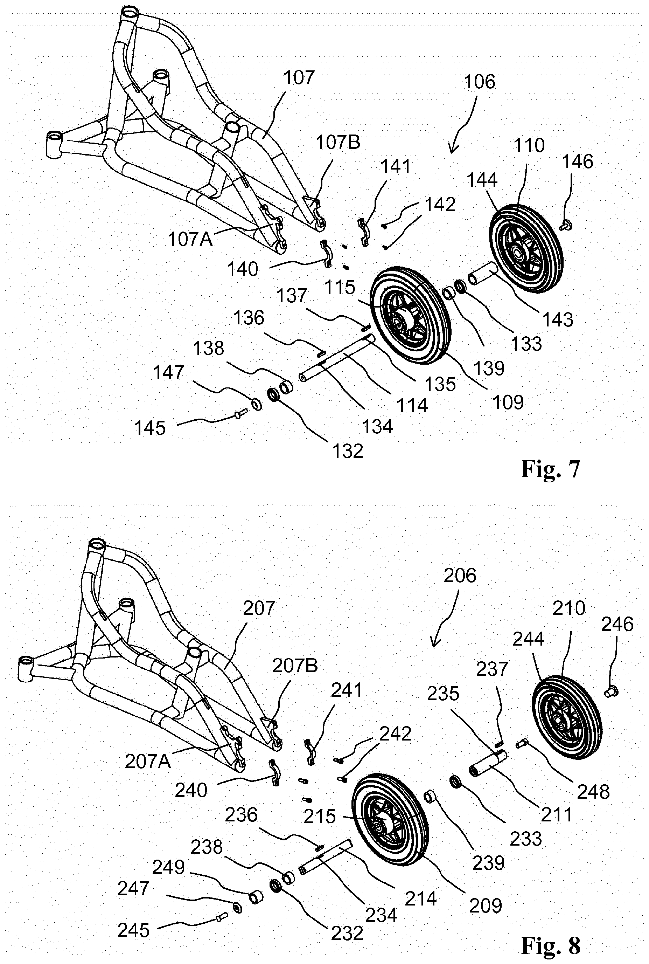

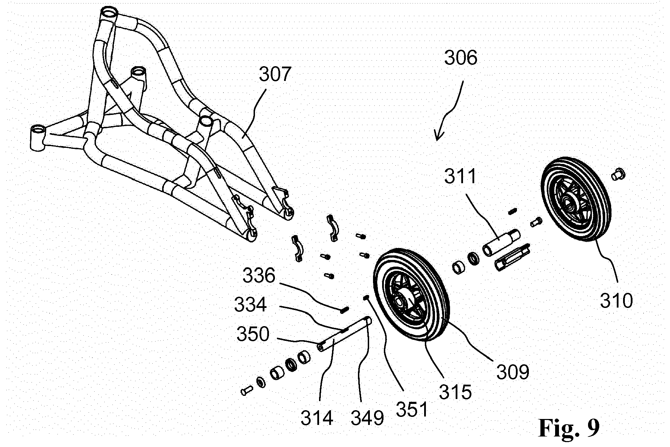

Ein zweites Ausführungsbeispiel der Erfindung, bei dem dieses Problem behoben ist, zeigt Fig. 7 in Form einer Explosionsdarstellung des Rahmens 107 und des hinteren Teils des Fahrwerks mit der zweirädrigen Ausführung der Hinterachse 106. Die übrigen Teile der Gehhilfe 1 sind hier nicht dargestellt, da sie mit dem in den Figuren 1 bis 3 gezeigten ersten Ausführungsbeispiel identisch sind. Dies gilt auch für die Darstellung weiterer Ausführungsbeispiele in den Figuren 8 und 9. Bei dem Ausführungsbeispiel von Fig. 7 sind die beiden hinteren Räder 109 und 110 durch eine gemeinsame Achse 114 starr miteinander verbunden, d.h. sie können sich nicht relativ zu dieser und damit auch nicht relativ zueinander drehen. Damit die Räder 109 und 110 auf dem Boden abrollen können, ist in diesem Fall die gemeinsame Achse 114 mittels Wälzlagern 132 und 133 an den hinteren Endabschnitten 107A und 107B des Rahmens 107 drehbar gelagert.

An der Mantelfläche der gemeinsamen Achse 114 sind zwei axiale Nuten 134 und 135 ausgebildet, in die jeweils eine Passfeder 136 bzw. 137 einsteckbar ist. Zur Montage der Achse 114 wird zunächst die Passfeder 136 in die erste Nut 134 eingelegt. Die Passfeder 136 dient als Mitnehmer für das erste Rad 109. Anschließend wird das erste Rad 109 soweit auf die Achse 114 geschoben, bis sich die Passfeder 136 innerhalb der Felge 115 des ersten Rades 109 befindet, wo sie in eine innenseitige axiale Nut in der Felge 115 eingreift. In dieser Stellung ragt der überwiegende Teil der Achse 114 auf der in Fig. 7 rechten Seite des Rades 109 aus der Felge 115 heraus. Danach werden auf beiden Seiten der Felge 115 Abstandsringe 138 und 139 und anschließend die Wälzlager 132 und. 133 jeweils von links bzw. von rechts auf die Achse 114 geschoben. Die Wälzlager 132 und 133 werden sodann mit Hilfe von Klemmen 140 bzw. 141 an den hinteren Endabschnitten 107A bzw. 107B des Rahmens 107 befestigt. Die Befestigung der Klemmen 140 und 141 an den hinteren Endabschnitten 107A bzw. 107B erfolgt mittels Schrauben 142.

Um das zweite Rad 110 an der Achse 114 anzubringen, wird zuerst eine Abstandshülse 143 auf den über die Felge 115 hinausragenden Abschnitt der Achse 114 geschoben. Danach wird die zweite Passfeder 137 in die dafür vorgesehene axiale Nut 135 eingelegt und das zweite Rad 110 soweit auf die Achse 114 geschoben, bis die Passfeder 137 in eine innenseitige Nut in der Felge 144 des zweiten Rades 110 eingreift. Durch Anziehen von axialen Schrauben 145 und 146 an den beiden Enden der Achse 114 wird die Anordnung spielfrei fixiert, wobei vorher noch eine Kappe 147 auf das linke Ende der Achse 114 aufgesetzt wird, um ein freies Laufen des Wälzlagers 132 zu ermöglichen. Auf der gegenüberliegenden Seite übernimmt die Abstandshülse 143 die Funktion der Kappe 147.

Zur Anordnung des zweiten Rades 110 auf der linken anstelle der rechten Seite der Gehhilfe 1 wird die gemeinsame Achse 114 in einer gegenüber der in Fig. 7 gezeigten Stellung um 180° gedrehten Stellung eingebaut, in welcher die Achse 114 nach links anstatt nach rechts aus der Felge 115 des ersten Rades 109 herausragt. Ansonsten erfolgt die Montage in der gleichen Weise wie vorausgehend beschrieben.

Mit der Felge 115 des Rades 109 ist eine Bremsscheibe fest verbunden, die mit einem an dem Rahmen 107 befestigten Bremssattel zusammenwirkt. Diese bei allen Ausführungsbeispielen der Erfindung identischen Komponenten der Bremse der Gehhilfe 1 sind in Fig. 7 nicht dargestellt. In Fig. 2 sind sie links von dem dortigen ersten Rad 9 sichtbar. Bei dem zweiten Ausführungsbeispiel wirkt diese Bremse infolge der starren Verbindung der beiden Räder 109 und 110 auf das zweite Rad 110 ebenso wie auf das erste Rad 109, so dass hier eine teilweise Gewichtsverlagerung auf das zweite Rad 110 die Bremswirkung bei einer Bremsung in einer Kurve nicht beeinträchtigt.

Die einrädrige Ausführung der Hinterachse 106 unterscheidet sich von der in Fig. 7 dargestellten zweirädrigen Ausführung dadurch, dass die Achse 114 für das in diesem Fall allein vorhandene erste Rad 109 kürzer ist und keine zweite Nut 135 für eine zweite Passfeder 137 aufweist, und dass anstelle der Abstandshülse 143 eine zweite Endkappe 147 vorgesehen ist. Zur Umrüstung zwischen der einrädrigen und der zweirädrigen Ausführung der Hinterachse 106 muss diese also von dem Rahmen 107 gelöst und gegen die jeweils andere, d.h. längere oder kürzere Version der Achse 114 ausgetauscht werden.

Ein drittes Ausführungsbeispiel der Erfindung zeigt Fig. 8 in der gleichen Darstellungsform wie Fig. 7. Der wesentliche Vorteil des dritten Ausführungsbeispiels gegenüber dem zweiten Ausführungsbeispiel besteht darin, dass hier das zweite Rad 210 der Hinterachse 206 wahlweise angebracht und wieder entfernt werden kann, ohne dass hierzu die Achse 214 des ersten Rades 209 von dem Rahmen 207 gelöst und gegen eine andere ausgetauscht werden muss. Ein weiterer Vorteil ist es, dass die Neueinstellung der Bremse des ersten Rades 109, die bei dem zweiten Ausführungsbeispiel von Fig. 7 bei jeder Umrüstung wegen des kompletten Austauschs der Achse 114 nötig ist, entfällt.

Wie aus Fig. 8 ersichtlich ist, finden bei dem dritten Ausführungsbeispiel zur Lagerung der Achse 214 des ersten Rades 209 an dem Rahmen 207 die gleichen Komponenten in der gleichen Anordnung Verwendung wie bei dem zweiten Ausführungsbeispiel von Fig. 7. Diese Komponenten und ihre Montage werden daher an dieser Stelle nicht erneut beschrieben.

Komponenten gleicher Bauart und Funktion sind in Fig. 8 mit Bezugszahlen gekennzeichnet, die um 100 größer sind als die Bezugszahlen der entsprechenden Komponenten in Fig. 7.

Die Achse 214 des ersten Rades 209 weist an ihrer Mantelfläche nur eine einzige axiale Nut 234 für eine Passfeder 236 auf. Letztere dient auch hier der drehfesten Verbindung der Achse 214 mit der Felge 215 des ersten Rades 209. Wenn sich die Passfeder 236 innerhalb der Felge 215 befindet, wo sie in eine innenseitige axiale Nut in der Felge 215 eingreift, und die Achse 214 an dem Rahmen 207 montiert ist, ragt die Achse 214 auf beiden Seiten gleich weit über die hinteren Endabschnitte 207A und 207B des Rahmens 207 hinaus. Dieser Überstand ist deutlich geringer als der Abstand der beiden Hinterräder 209 und 210 im fertig montierten Zustand der zweirädrigen Ausführung.

Bei einer Nutzung der Gehhilfe 1 mit nur einem Hinterrad 209 wird auf der in Fig. 8 rechten Seite der Achse 214 nach dem Aufschieben eines Abstandsrings 238 und eines Wälzlagers 233 ebenso wie auf der linken Seite nur ein weiterer Abstandsring 249 aufgeschoben, eine Endkappe 247 aufgesetzt und eine Schraube 245 eingeschraubt, d.h. die axiale Abfolge von Komponenten ist in diesem Fall spiegelbildlich zur linken Seite.

Zur Umrüstung auf die zweirädrige Ausführung mit einem zweiten Rad 210 auf der in Fahrtrichtung rechten Seite werden dort, d.h. auf der rechten Seite in Fig. 8, die Schraube 245, die Endkappe 247 und der Abstandsring 249 von der Achse 214 des ersten Rades 209 demontiert. Anstelle des Abstandsringes 249 wird eine Achsverlängerung 211 aufgesteckt. Hierzu weist diese auf ihrer dem ersten Rad 209 zugewandten Stirnseite eine Bohrung auf, deren Innendurchmesser dem Außendurchmesser der Achse 214 entspricht. Am Grund dieser Bohrung weist die Achsverlängerung 211 eine in Fig. 7 nicht sichtbare Nut in radialer Richtung auf. Hierzu passend weist die Achse 214 an beiden Enden integrale Vorsprünge auf, welche eine ähnliche Form wie die Passfeder 236 haben und in die Nut am Grund der Bohrung der Achsverlängerung 211 passen, so dass durch das Zusammenfügen der Achsverlängerung 211 mit der Achse 214 eine stirnseitige Nut-Feder-Verbindung hergestellt wird, die für eine drehfeste Verbindung der Achsverlängerung 211 mit der Achse 214 sorgt. Durch die axiale Überlappung zwischen der Achse 214 und der Achsverlängerung 211 wird eine ausreichende Biegesteifigkeit der Kombination dieser beiden Komponenten erzielt.

Die Achsverlängerung 211 wird sodann an der Achse 214 mittels einer durch die Achsverlängerung 211 axial hindurchragenden Schraube 248 spielfrei befestigt. Der Kopf der Schraube 248 ist in deren angezogenem Zustand in einer am Ende der Achsverlängerung 211 ausgebildeten Bohrung versenkt. Anschließend wird eine Passfeder 237 in eine axiale Nut 235 an der Mantelfläche der Achsverlängerung 211 eingelegt und das zweite Rad 210 soweit auf die Achsverlängerung 211 geschoben, bis die Passfeder 237 in eine innenseitige axiale Nut in der Felge 244 des zweiten Rades 210 eingreift. Hierdurch wird das zweite Rad 210 drehfest mit der Achsverlängerung 211 verbunden. Schließlich wird das zweite Rad 210 noch mittels einer Schraube 246 in axialer Richtung auf der Achsverlängerung 211 fixiert, wozu die Bohrung an der Stirnseite des Achsverlängerung 211, in welcher der Kopf der Schraube 248 versenkt ist, ein zu der Schraube 246 passendes Gewinde aufweist. Die äußere Schraube 246 könnte auch durch eine werkzeuglose Art der Befestigung ersetzt werden.

Im Ergebnis wird durch den vorausgehend beschriebenen Montagevorgang die Achse 214 des ersten Rades 209 mittels der Achsverlängerung 211 verlängert und durch ein zweites Rad 210 ergänzt, welches durch zwei Nut-Feder-Verbindungen starr mit dem ersten Rad 209, an welchem die Bremse der Achse 214 befestigt ist, verbunden ist. Diese Bremse wirkt somit unabhängig von der Gewichtsverteilung zwischen den Rädern 209 und 210 gleichermaßen auf beide Räder 209 und 210.

Um die Achse 214 des ersten Rades 209 wahlweise auch auf der anderen Seite verlängern und durch ein zweites Rad 210 ergänzen zu können, weist die Achse 214 auch auf der anderen, in Fig. 8 linken Stirnseite einen radial verlaufenden Vorsprung mit der Form einer Passfeder sowie ein axiales Gewinde auf. Die Achsverlängerung 211 kann somit bei Bedarf in gleicher Weise am anderen Ende der Achse 214 montiert werden, ohne dass hierzu eine Demontage der Achse 214 von dem Rahmen 207 nötig wäre.

Ein viertes Ausführungsbeispiel der Erfindung ist in Fig. 9 gezeigt. Dieses vierte Ausführungsbeispiel stimmt weitgehend mit dem dritten Ausführungsbeispiel überein und unterscheidet sich von diesem lediglich in der Gestaltung der drehfesten Verbindung zwischen der Achse 314 des ersten Rades 309 und der Achsverlängerung 311. Übereinstimmende Komponenten werden daher an dieser Stelle nicht erneut beschrieben. Komponenten gleicher Bauart und Funktion sind in Fig. 8 mit Bezugszahlen gekennzeichnet, die um 100 größer sind als die Bezugszahlen der entsprechenden Komponenten in Fig. 8.

Wie aus Fig. 9 ersichtlich ist, weist die Achse 314 des ersten Rades 309 hier ebenso wie diejenige des dritten Ausführungsbeispiels an der Mantelfläche eine axiale Nut 334 für eine Passfeder 336 zur drehfesten Verbindung mit der Felge 315 des ersten Rades 309 auf. Zur Herstellung einer drehfesten Verbindung zwischen der Achse 314 und der Achsverlängerung 311 weist die Achse 314 anstelle radialer Vorsprünge an den beiden Stirnseiten hier zwei weitere axiale Nuten 349 und 350 an ihrer Mantelfläche nahe ihren beiden axialen Enden auf, die zur wahlweisen Aufnahme einer zweiten Passfeder 351 geeignet sind. Dementsprechend weist die Achsverlängerung 311, die in Fig. 9 sowohl in der Explosionsdarstellung als auch darunter zusätzlich geschnitten dargestellt ist, an der Innenseite der stirnseitigen Bohrung, mittels derer sie axial auf die Achse 314 aufsteckbar ist, eine in Fig. 9 nicht sichtbare axiale Nut auf, in welche die in die Nut 349 oder 350 der Achse 314 eingelegte Passfeder 351 beim Aufstecken der Achsverlängerung 311 auf die Achse 314 eingreift.

Die drehfeste Fixierung des zweiten Rades 310 an der Achsverlängerung 311 erfolgt genauso wie bei der dritten Ausführungsform. Somit unterscheidet sich die vierte Ausführungsform von der dritten nur in der Art der Nut-Feder-Verbindung zwischen der Achse 314 des ersten Rades 309 und der Achsverlängerung 311, die hier axial anstatt radial ausgerichtet und an der Mantelfläche der Achse 314 anstelle ihrer Stirnseite angeordnet ist. Zur wahlweisen Montage der Achsverlängerung 311 an beiden Enden der Achse 314 sind dort jeweils eine Nut 349 bzw. 350 sowie ein axiales Gewinde vorgesehen. Die Achsverlängerung 311 kann somit bei Bedarf in gleicher Weise an beiden Enden der Achse 314 montiert werden, ohne dass diese hierzu von dem Rahmen 307 demontiert werden muss.

Zu den Ausführungsformen mit drehfester Verbindung der beiden Hinterräder in der zweirädrigen Ausführung der Hinterachse ist anzumerken, dass hier bei einer Kurvenfahrt zwangsweise ein Schlupf an mindestens einem Rad der Hinterachse auftritt. Dieser Schlupf ist jedoch nicht gravierend, da der Abstand der Hinterräder wesentlich geringer ist als derjenige der Vorderräder, welche an der Vorderachse lenkbar und einzeln drehbar gelagert sind. Der Vorteil einer zuverlässigeren Bremswirkung wiegt den Nachteil eines geringfügigen Schlupfes der Hinterräder bei einer Kurvenfahrt bei weitem auf.

## Patentansprüche

1. Fahrbare Gehhilfe (1) mit einem Fahrwerk (2), einem Rahmen (7; 107; 207; 307) und einer Auflage (8) für ein Bein einer Person, wobei das Fahrwerk (2) eine zweirädrige Vorderachse (3) und eine Hinterachse (6; 106; 206; 306) aufweist, **dadurch gekennzeichnet, dass** die eine Hinterachse (6; 106; 206; 306) zwischen einer einrädrigen Ausführung mit einem ersten Rad (9; 109; 209; 309) und einer zweirädrigen Ausführung mit einem ersten Rad (9; 109; 209; 309) und einem zweiten Rad (10; 110; 210; 310) umrüstbar ist.

2. Fahrbare Gehhilfe (1) nach Anspruch 1, **dadurch gekennzeichnet, dass** zur Umrüstung von der einrädrigen in die zweirädrige Ausführung der Hinterachse (106) ein Umrüstsatz vorgesehen ist, der ein zweites Rad (110) und eine gemeinsame Achse (114) für beide Räder (109, 110) aufweist, wobei die gemeinsame Achse (114) länger ist als diejenige der einrädrigen Ausführung, und an dem Rahmen (107) in zwei verschiedenen Positionen montierbar ist, in welchen das erste Rad (109) jeweils an der gleichen Stelle wie in der einrädrigen Ausführung und das zweite Rad (110) wahlweise links oder rechts lateral von dem ersten Rad (109) versetzt angeordnet ist.

3. Fahrbare Gehhilfe (1) nach Anspruch 1, **dadurch gekennzeichnet, dass** zur Umrüstung von der einrädrigen in die zweirädrige Ausführung ein Umrüstsatz vorgesehen ist, der eine an der Achse (14; 214; 314) des ersten Rades (9; 209; 309) wahlweise auf jeder der beiden Seiten dieser Achse (14; 214; 314) montierbare Achsverlängerung (11; 211; 311) und ein zweites Rad (10; 210; 310) aufweist.

4. Fahrbare Gehhilfe nach Anspruch 3, **dadurch gekennzeichnet, dass** sich die Achsverlängerung (11; 211; 311) im montierten Zustand koaxial zur Achse (14; 214; 314) des ersten Rades (9; 209; 309) erstreckt.

5. Fahrbare Gehhilfe nach einem der Ansprüche 2 bis 4, **dadurch gekennzeichnet, dass** das zweite Rad (10; 110; 210; 310) einen geringfügig, insbesondere um 1 cm bis 3 cm, kleineren Durchmesser hat als das erste Rad (9; 109; 209; 309).

6. Fahrbare Gehhilfe nach einem der Ansprüche 2 bis 5, **dadurch gekennzeichnet, dass** das zweite Rad (10; 110; 210; 310) in der zweirädrigen Ausführung der Hinterachse (6; 106; 206; 306) einen Abstand von dem ersten Rad (9; 109; 209; 309) hat, der mindestens ein Sechstel des Abstandes zwischen den beiden Rädern (12, 13) der Vorderachse (3) beträgt.

7. Fahrbare Gehhilfe nach einem der Ansprüche 2 bis 6, **dadurch gekennzeichnet, dass** das zweite Rad (10; 110; 210; 310) in der zweirädrigen Ausführung der Hinterachse (6; 106; 206; 306) einen Abstand von dem ersten Rad (9; 109; 209; 309) hat, der höchstens ein Drittel des Abstandes zwischen den beiden Rädern (12, 13) der Vorderachse (3) beträgt.

8. Fahrbare Gehhilfe nach einem der Ansprüche 3 bis 7, **dadurch gekennzeichnet, dass** das zweite Rad (10; 110; 210; 310) mittels einer Rastverbindung ohne Verwendung eines Werkzeugs an der Achsverlängerung (11; 211; 311) montierbar und von dieser demontierbar ist.

9. Fahrbare Gehhilfe nach einem der Ansprüche 3 bis 8, **dadurch gekennzeichnet, dass** die Achsverlängerung (11) eine auf die Achse (14) des ersten Rades (9) aufschraubbare Distanzhülse (23) und eine mit der Distanzhülse (23) verrastbare Zusatzachse (24), an welcher das zweite Rad (10) gelagert ist, aufweist.

10. Fahrbare Gehhilfe nach einem der Ansprüche 1 bis 9, **dadurch gekennzeichnet, dass** sowohl in der einrädrigen Ausführung, als auch in der zweirädrigen Ausführung das erste Rad (9; 109; 209; 309) der Hinterachse (6; 106; 206; 306) lateral mittig zwischen den Vorderrädern (12, 13) angeordnet ist.

11. Fahrbare Gehhilfe nach einem der Ansprüche 1 bis 10, **dadurch gekennzeichnet, dass** die Hinterachse (106; 206; 306) drehbar an dem Rahmen (107; 207; 307) gelagert ist und in der zweirädrigen Ausführung ihre beiden Räder (109, 110; 209, 210; 309, 310) drehfest miteinander verbunden sind.

12. Fahrbare Gehhilfe nach Anspruch 10, **dadurch gekennzeichnet, dass** die Achse (214; 314) des ersten Rades (209; 309) drehbar an dem Rahmen (107; 207; 307) gelagert und das erste Rad (209; 309) drehfest mit ihr verbunden ist, und dass zur Umrüstung in die zweirädrige Ausführung eine Achsverlängerung (211; 311) drehfest mit der Achse (214; 314) des ersten Rades (209; 309) verbindbar ist und das zweite Rad (210; 310) drehfest mit der Achsverlängerung (211; 311) verbindbar ist.

13. Fahrbare Gehhilfe nach einem der Ansprüche 1 bis 12, **dadurch gekennzeichnet, dass** sowohl in der einrädrigen Ausführung, als auch in der zweirädrigen Ausführung der Hinterachse (6; 106; 206; 306) nur eine einzige Bremse vorgesehen ist, welche an dem ersten Rad (9; 109; 209; 309) der Hinterachse (6; 106; 206; 306) angreift.

14. Umrüstsatz zur Umrüstung einer Gehhilfe (1) nach einem der Ansprüche 3 bis 13 von einer einrädrigen in eine zweirädrige Ausführung, wobei der Umrüstsatz eine an der Achse (14; 214; 314) der Gehhilfe (1) montierbare Achsverlängerung (11; 211; 311) und ein daran drehbar gelagertes zweites Rad (10; 210; 310) aufweist.

15. Umrüstsatz zur Umrüstung einer Gehhilfe (1) nach einem der Ansprüche 2 oder 5 bis 7 oder 10 bis 13 von einer einrädrigen in eine zweirädrige Ausführung, wobei der Umrüstsatz ein zweites Rad (110) sowie eine gemeinsame Achse (114) für das erste Rad (109) der Gehhilfe (1) und das zweite Rad (110) des Umrüstsatzes aufweist, wobei die gemeinsame Achse (114) länger ist als diejenige der einrädrigen Ausführung der Gehhilfe und an dem Rahmen (107) der Gehhilfe in zwei verschiedenen Positionen montierbar ist, in welchen das erste Rad (109) jeweils an der gleichen Stelle wie in der einrädrigen Ausführung und das zweite Rad (110) wahlweise links oder rechts lateral von dem ersten Rad (109) versetzt angeordnet ist.

## Claims

1. A mobile walking aid (1) comprising a chassis (2), a frame (7; 107; 207; 307) and a support (8) for a person's leg, wherein the chassis (2) comprises a two-wheeled front axle (3) and a rear axle (6; 106; 206; 306), **characterised in that** the one rear axle (6; 106; 206; 306) is convertible between a one-wheeled version with a first wheel (9; 109; 209; 309) and a two-wheeled version with a first wheel (9; 109; 209; 309) and a second wheel (10; 110; 210; 310).

2. A mobile walking aid (1) according to claim 1, **characterised in that** for conversion from the one-wheeled to the two-wheeled version of the rear axle (106) a conversion kit is provided which comprises a second wheel (110) and a common axle (114) for both wheels (109, 110), the common axle (114) being longer than that of the one-wheel version, and being mountable on the frame (107) in two different positions, in each of which the first wheel (109) is in the same position as in the onee-wheel version and the second wheel (110) is selectively offset laterally to the left or right of the first wheel (109).

3. A mobile walking aid (1) according to claim 1, **characterised in that** for conversion from the one-wheeled to the two-wheeled version a conversion kit is provided which comprises an axle extension (11; 211; 311) which can be mounted on the axle (14; 214; 314) of the first wheel (9; 209; 309) optionally on either side of this axle (14; 214; 314) and a second wheel (10; 210; 310).

4. A mobile walking aid according to claim 3, **characterised in that** the axle extension (11; 211; 311) extends coaxially with the axle (14; 214; 314) of the first wheel (9; 209; 309) in the assembled state.

5. A mobile walking aid according to any one of claims 2 to 4, **characterized in that** the second wheel (10; 110; 210; 310) has a slightly smaller diameter, in particular by 1 cm to 3 cm, than the first wheel (9; 109; 209; 309).

6. A mobile walking aid according to any one of claims 2 to 5, **characterized in that** the second wheel (10; 110; 210; 310) in the two-wheeled version of the rear axle (6; 106; 206; 306) has a distance from the first wheel (9; 109; 209; 309) which is at least one sixth of the distance between the two wheels (12, 13) of the front axle (3).

7. A mobile walking aid according to any one of claims 2 to 6, **characterized in that** the second wheel (10; 110; 210; 310) in the two-wheeled version of the rear axle (6; 106; 206; 306) has a distance from the first wheel (9; 109; 209; 309) which is at most one third of the distance between the two wheels (12, 13) of the front axle (3).

8. A mobile walking aid according to any one of claims 3 to 7, **characterized in that** the second wheel (10; 110; 210; 310) is mountable on and dismountable from the axle extension (11; 211; 311) by means of a snap-fit connection without using a tool.

9. A mobile walking aid according to one of claims 3 to 8, **characterised in that** the axle extension (11) has a spacer sleeve (23) which can be screwed onto the axle (14) of the first wheel (9) and an additional axle (24) which can be locked to the spacer sleeve (23) and on which the second wheel (10) is mounted.

10. A mobile walking aid according to any one of claims 1 to 9, **characterised in that** both in the one-wheeled version and in the two-wheeled version the first wheel (9; 109; 209; 309) of the rear axle (6; 106; 206; 306) is arranged laterally centrally between the front wheels (12, 13).

11. A mobile walking aid according to any one of claims 1 to 10, **characterised in that** the rear axle (106; 206; 306) is rotatably mounted on the frame (107; 207; 307) and, in the two-wheeled version, its two wheels (109, 110; 209, 210; 309, 310) are non-rotatably connected to each other.

12. A mobile walking aid according to claim 10, **characterised in that** the axle (214; 314) of the first wheel (209; 309) is rotatably mounted on the frame (107; 207; 307) and the first wheel (209; 309) is connected to it in a rotationally fixed manner, and **in that**, for conversion to the two-wheel version, an axle extension (211; 311) can be connected in a rotationally fixed manner to the axle (214; 314) of the first wheel (209; 309) and the second wheel (210; 310) can be connected in a rotationally fixed manner to the axle extension (211; 311).

13. A mobile walking aid according to one of claims 1 to 12, **characterised in that** in both, the one-wheeled version and the two-wheeled version of the rear axle (6; 106; 206; 306), only a single brake is provided which engages the first wheel (9; 109; 209; 309) of the rear axle (6; 106; 206; 306).

14. A conversion kit for converting a walking aid (1) according to any one of claims 3 to 13 from a one-wheeled to a two-wheeled version, wherein the conversion kit comprises an axle extension (11; 211; 311) mountable on the axle (14; 214; 314) of the walking aid (1) and a second wheel (10; 210; 310) rotatably mounted thereon.

15. Conversion kit for converting a walking aid (1) according to any one of claims 2 or 5 to 7 or 10 to 13 from a onle-wheeled to a two-wheeled version, wherein the conversion kit comprises a second wheel (110) as well as a common axle (114) for the first wheel (109) of the walking aid (1) and the second wheel (110) of the conversion kit, the common axle (114) being longer than that of the one-wheeled version of the walker and being mountable on the frame (107) of the walker in two different positions, in each of which the first wheel (109) is in the same position as in the one-wheeled version and the second wheel (110) is optionally offset laterally to the left or right of the first wheel (109).

## Revendications

1. Aide technique à la marche (1) mobile comprenant un châssis (2), un cadre (7 ; 107 ; 207 ; 307) et un appui (8) pour une jambe d'une personne, dans laquelle le châssis (2) présente un essieu avant à deux roues (3) et un essieu arrière (6 ; 106 ; 206 ; 306), **caractérisée en ce que** le un essieu arrière (6 ; 106 ; 206 ; 306) peut être converti entre un mode de réalisation à une roue avec une première roue (9 ; 109 ; 209 ; 309) et un mode de réalisation à deux roues avec une première roue (9 ; 109 ; 209 ; 309) et une deuxième roue (10 ; 110 ; 210 ; 310).

2. Aide technique à la marche (1) mobile selon la revendication 1, **caractérisée en ce que** pour la conversion du mode de réalisation à une roue au mode de réalisation à deux roues de l'essieu arrière (106) un kit de conversion est prévu, qui présente une deuxième roue (110) et un essieu (114) commun pour les deux roues (109, 110), dans laquelle l'essieu (114) commun est plus long est que celui du mode de réalisation à une roue, et peut être monté sur le cadre (107) dans deux positions différentes, dans lesquelles la première roue (109) est disposée respectivement au même endroit que dans le mode de réalisation à une roue et la deuxième roue (110) de manière latéralement décalée sélectivement à gauche ou à droite de la première roue (109) .

3. Aide technique à la marche (1) mobile selon la revendication 1, **caractérisée en ce que** pour la conversion du mode de réalisation à une roue au mode de réalisation à deux roues un kit de conversion est prévu, qui présente un prolongement axial (11 ; 211 ; 311) pouvant être monté sur l'essieu (14 ; 214 ; 314) de la première roue (9 ; 209 ; 309) sélectivement sur chacun des deux côtés de cet essieu (14 ; 214 ; 314) et une deuxième roue (10 ; 210 ; 310).

4. Aide technique à la marche mobile selon la revendication 3, **caractérisée en ce que** le prolongement axial (11 ; 211 ; 311) s'étend dans l'état monté coaxialement par rapport à l'essieu (14 ; 214 ; 314) de la première roue (9 ; 209 ; 309) .

5. Aide technique à la marche mobile selon l'une quelconque des revendications 2 à 4, **caractérisée en ce que** la deuxième roue (10 ; 110 ; 210 ; 310) possède un diamètre légèrement plus petit, en particulier de 1 cm à 3 cm, que la première roue (9 ; 109 ; 209 ; 309).

6. Aide technique à la marche mobile selon l'une quelconque des revendications 2 à 5, **caractérisée en ce que** la deuxième roue (10 ; 110 ; 210 ; 310) dans le mode de réalisation à deux roues de l'essieu arrière (6 ; 106 ; 206 ; 306) a un écart par rapport à la première roue (9 ; 109 ; 209 ; 309) qui atteint au moins un sixième de l'écart entre les deux roues (12, 13) de l'essieu avant (3) .

7. Aide technique à la marche mobile selon l'une quelconque des revendications 2 à 6, **caractérisée en ce que** la deuxième roue (10 ; 110 ; 210 ; 310) dans le mode de réalisation à deux roues de l'essieu arrière (6 ; 106 ; 206 ; 306) a un écart par rapport à la première roue (9 ; 109 ; 209 ; 309) qui atteint au plus un tiers de l'écart entre les deux roues (12, 13) de l'essieu avant (3).

8. Aide technique à la marche mobile selon l'une quelconque des revendications 3 à 7, **caractérisée en ce que** la deuxième roue (10 ; 110 ; 210 ; 310) peut être montée sur le prolongement axial (11 ; 211 ; 311) au moyen d'une liaison par encliquetage sans utiliser d'outil et peut être démontée de celui-ci.

9. Aide technique à la marche mobile selon l'une quelconque des revendications 3 à 8, **caractérisée en ce que** le prolongement axial (11) présente un manchon d'écartement (23) pouvant être vissé sur l'essieu (14) de la première roue (9) et un essieu supplémentaire (24) pouvant être encliqueté avec le manchon d'écartement (23), sur lequel la deuxième roue (10) est montée.

10. Aide technique à la marche mobile selon l'une quelconque des revendications 1 à 9, **caractérisée en ce que** aussi bien dans le mode de réalisation à une roue que dans le mode de réalisation à deux roues la première roue (9 ; 109 ; 209 ; 309) de l'essieu arrière (6 ; 106 ; 206 ; 306) est disposée latéralement au centre entre les roues avant (12, 13).

11. Aide technique à la marche mobile selon l'une quelconque des revendications 1 à 10, **caractérisée en ce que** l'essieu arrière (106 ; 206 ; 306) est monté de manière rotative sur le cadre (107 ; 207 ; 307) et dans le mode de réalisation à deux roues ses deux roues (109, 110 ; 209, 210 ; 309, 310) sont reliées l'une à l'autre de manière solidaire en rotation.

12. Aide technique à la marche mobile selon la revendication 10, **caractérisée en ce que** l'essieu (214 ; 314) de la première roue (209 ; 309) est monté de manière rotative sur le cadre (107 ; 207 ; 307) et la première roue (209 ; 309) est reliée à celle-ci de manière solidaire en rotation, et que pour la conversion dans le mode de réalisation à deux roues un prolongement axial (211 ; 311) peut être relié de manière solidaire en rotation à l'essieu (214 ; 314) de la première roue (209 ; 309) et la deuxième roue (210 ; 310) peut être reliée de manière solidaire en rotation au prolongement axial (211 ; 311).

13. Aide technique à la marche mobile selon l'une quelconque des revendications 1 à 12, **caractérisée en ce que** aussi bien dans le mode de réalisation à une roue que dans le mode de réalisation à deux roues de l'essieu arrière (6 ; 106 ; 206 ; 306) un seul frein est prévu, lequel agit sur la première roue (9 ; 109 ; 209 ; 309) de l'essieu arrière (6 ; 106 ; 206 ; 306).

14. Kit de conversion pour la conversion d'une aide technique à la marche (1) selon l'une quelconque des revendications 3 à 13 d'un mode de réalisation à une roue à un mode de réalisation à deux roues, dans lequel le kit de conversion présente un prolongement axial (11 ; 211 ; 311) pouvant être monté sur l'essieu (14 ; 214 ; 314) de l'aide technique à la marche (1) et une deuxième roue (10 ; 210 ; 310) pouvant être montée de manière rotative sur celui-ci.

15. Kit de conversion pour la conversion d'une aide technique à la marche (1) selon l'une quelconque des revendications 2 ou 5 à 7 ou 10 à 13 d'un mode de réalisation à une roue à un mode de réalisation à deux roues, dans lequel le kit de conversion présente une deuxième roue (110) ainsi qu'un essieu (114) commun pour la première roue (109) de l'aide technique à la marche (1) et la deuxième roue (110) du kit de conversion, dans lequel l'essieu (114) commun est plus long que celui du mode de réalisation à une roue de l'aide technique à la marche et peut être monté sur le cadre (107) de l'aide technique à la marche dans deux positions différentes, dans lesquelles la première roue (109) est disposée respectivement au même endroit que dans le mode de réalisation à une roue et la deuxième roue (110) de manière décalée latéralement sélectivement à gauche ou à droite de la première roue (109).
